# EUROPEAN PATENT SPECIFICATION

(11) **EP 2 673 069 B1**
(45) Date of publication and mention of the grant of the patent: **25.04.2018**
(21) Application number: 12744648.2
(22) Date of filing: 08.02.2012
(51) Int. Cl.: B01D 53/14, B01D 53/52, C01B 17/20, C01G 3/06, C10K 1/00, C10K 1/08, C10K 1/10, C10K 1/18

(54) **METHOD OF PURIFYING A GAS**
VERFAHREN ZUR REINIGUNG EINES GASES
PROCÉDÉ DE PURIFICATION D'UN GAZ

(30) Priority: 08.02.2011 EP 11153704; 08.02.2011 US 201161440420 P
(43) Date of publication of application: 18.12.2013
(73) Proprietor: Neste Oyj, 02150 Espoo (FI)
(72) Inventor: KESKINEN, Kari I, FI-06101 Porvoo (FI); KOSKINEN, Jukka, FI-06101 Porvoo (FI); AITTAMAA, Juhani, FI-06101 Porvoo (FI); PETTERSSON, Marianne, FI-06101 Porvoo (FI)
(74) Representative: Espatent Oy
(86) International application number: PCT/FI2012/050113
(87) International publication number: WO 2012/107641

(56) References cited:
- WO-A1-98/55209
- WO-A1-2004/072207
- DE-A1- 2 304 497

## Description

### Background of the Invention

### Field of the Invention

The present invention relates to gas purification. In particular, the present invention concerns a method for removing hydrogen sulphide and similar sulphurous compounds optionally together with ammonia and hydrogen chloride from a gas produced by gasification of biomass.

### Description of Related Art

In a Fischer-Tropsch reactor (in the following also abbreviated FT reactor), hydrogen and carbon monoxide are reacted in the presence of a transition metal catalyst, such as cobalt or iron, to form a composition containing a broad range of linear alkanes up to waxes. After suitable processing this product forms a liquid hydrocarbon composition that is useful as a fuel for combustion engines, in particular diesel engines.

A number of carbonaceous sources have been used as raw-materials for producing a hydrogen and carbon monoxide containing gas (also known as a "syngas") which can be fed into the FT process. Originally, coal was used as the primary raw-material, but lately also natural gas has been taken into use in commercial processes. Even more recently various processes have been developed in which biological materials, such as plant oils, plant waxes and other plant products and plant parts or even oils and waxes of animal origin, are gasified and processed to produce a suitable feed. In a further alternative approach, viz. in the BTL process (biomass to liquid process), a biomass comprising whole plants is used as a raw-material. The BTL process allows for the utilization of forestry residues.

Conventionally, a BTL process includes the steps of biomass feed pre-treatment, biomass gasification, raw syngas cooling and filtering, raw gas purification, shift reaction for balancing H₂/CO ratio, FT-process and FT product refining. For gasification of the biomass oxygen gas can be used (e.g. by blowing it into the gasification zone) for minimizing inerts in syngas.

For fuel production by the FT process, it is preferred to use steam or oxygen or combinations thereof blown into the gasification. A typical temperature range is about 500 to about 900 °C.

At these conditions, biomass, such as lignocellulosic materials, will produce a gas containing carbon monoxide, carbon dioxide, hydrogen and water gas. Further, the gas will also contain some hydrocarbons and impurities, such as sulphur compounds and trace metal compounds. These have to be removed.

Therefore, the process also contains steps for syngas purification and guarding (i.e. for protecting of catalysts downstream in the process).

In practice, the gas obtained from gasification of biomass, which gas oftentimes has been subjected to further reforming, is cooled before the Fischer-Tropsch reaction and impurities, such as COS, HCN, CO₂, traces of alkali metal compounds and metal (Ni, Fe) carbonyl compounds, HCl, NH₃, tar compounds and sulphur compounds are removed from the gas which optionally is being reformed.

To mention an example of a typical composition: the feed gas conducted to a H₂S removal processes contains typically 100 to 400 ppm H₂S, 20 to 40 vol-% CO₂, 0.5 to 6 vol-% CH₄, 20 to 40 vol-% H₂, 10 to 30 vol-% CO.

The pressure of the feed gas is preferably 4 to 30 bar(a), depending on gasifier operation pressure. The temperature of the feed is approximately 30 to approximately 100 °C.

For removing the impurities at least one, conventionally a plurality of separate treatment steps are employed. Typically methanol wash is utilized for separating sulphur compounds and carbon dioxide. These wash processes are commercially applied for effective CO₂ removal at low sulphur contents. A conventional methanol wash operates at temperatures of about -40 °C and thus requires abundant energy. Tar compounds (like naphthalene and benzene) are removed typically by additional physical wash and metal carbonyls by heat treatment or guard beds.

### Summary of the Invention

It is an aim of the present invention to eliminate at least a part of the problems related to the known technology.

In particular, the present invention aims at providing a method of efficient removal of hydrogen sulphide and other impurities, like NH₃, COS, HCN and small alkali metal compounds from synthesis gas.

The present invention is based on the idea of absorbing impurities, for example sulphur compounds (in particular sulphides, such as H₂S), present in the synthesis gas into an aqueous solution containing metal ions, and precipitating the absorbed sulphur compound with the metal ions to form solid metal sulphide(s).

It is known in the art that gas containing large volumes of hydrogen sulphide can be freed from the hydrogen sulphide by first conducting the gas stream into aqueous solutions containing copper ions in water for absorbing the hydrogen sulphide and then oxidizing the copper sulphide thus formed with air or oxygen gas to produce elemental sulphur.

In this known technology, disclosed in DE 2304497, the aqueous absorption medium contains rather high concentrations of copper ions (28.9 g Cu in 1400 ml water), and absorption of the hydrogen sulphide is carried out by bubbling the gas into the aqueous medium.

It is also known in the art (EP0986432) that sulphur and/or sulphur containing contaminant compounds can be removed from a gas flow, which also comprises CO₂ by a method which comprises the steps of: placing the gas flow into contact with a preselected metal ion in the form of an aqueous salt solution at a pH lying in the range of between about -0.05 and about 7.0, wherein the metal ion and the contaminants react together in order to form a solid metal salt of the contaminants which precipitates out of the gas flow. The metal ion is preferably chosen such that the corresponding metal sulphide thereof is substantially non-soluble, wherein the metal is chosen from the group substantially consisting of Zn, Fe, Cu, Ag, Pb, Cd, Co, Mg, Mn, Ni, and Sn. Examples are given on the use of 1M ZnSO₄ and 1M CuSO₄ as washing liquids. WO 2004/072207 A1 discloses a method for the production of high-quality synthesis gas by pyrolysis and gasification of a biomass feedstock, wherein the synthesis gas is further converted to traffic fuel by Fischer-Tropsch synthesis. It is mentioned that a gas of that kind comprises among other components sulfur compounds and that scrubbing would be an appropriate means to remove these. In connection with the present invention, it was found out that metal ions, for example Cu²⁺ ions, react fast with H₂S in liquid at even very small metal ion concentrations. Typically the concentration of the metal ion compound of the wash solution depends on the corresponding metal sulphide solubility at given solution. The metal ion concentration for copper can be even lower than about 1000 weight-ppm, or lower than about 100 weight-ppm, calculated from the weight of the absorption liquid. This allows for a very effective and profitable integrated process concept for removal of H₂S and other impurities mentioned above from syngas.

The absorption liquid can be contacted with the gas which is to be purified for example in a column, such as a tray or packed column, but other contacting devices can also be used. The absorption liquid can be applied by spraying or atomizing, although bubbling is not excluded. When absorbing sulphurous compounds to form metal sulphides also acidic compounds, such as hydrogen chloride will become absorbed. Further, the aqueous, metal ion containing solution can be applied in acidic form. In this form, it will be capable of absorbing such as ammonia (NH₃) and hydrogen chloride (HCl) as well as other alkaline and acidic impurities.

More specifically, the present invention is characterized by what is stated in the characterizing part of claim 1.

Considerable advantages are obtained by the invention. Thus, in the present novel method separate purification phases are combined. Even the gas cooling stage can be combined. Impurities, like H₂S, COS, NH₃, HCl, some organic compounds and small particles, are absorbed in water solution.

The present absorption process for this specific application allows also for the following advantages: removal of the impurities described above and especially the almost complete removal of H₂S enhances the following methanol wash process in terms of reduced energy costs due to H₂S removal from methanol, and reduced H₂S guard bed costs before FT-reactor.

Aqueous copper sulfate precipitates hydrogen sulfide as copper sulfide according to Formula I:

Cu²⁺ + H₂S + SO₄²⁻ → CuS + 2 H⁺ + SO₄²⁻ (1)

Generally, the absorption of H₂S from synthesis gas into Me-SO₄-water solution (wherein Me stands for a metal, in particular a transition metal, such as copper, iron, zinc or cobalt) is a mass transfer limited process. H₂S has to be dissolved in liquid phase where the reaction of H₂S and Me-SO₄ takes place fast. Me²⁺ ions and H₂S have to be present in liquid film where the reaction takes place and mass transfer of H₂S and Me²⁺ ions into liquid film are limiting the reactions. Reaction of Me²⁺ ions with H₂S forms MeS, which will precipitate as small crystals effectively because of small solubility of the sulphide in water.

The crystals are formed by nucleation and crystal growth mechanisms. The nucleation and crystal growth rate depend on the supersaturation of Me²⁺ and S²⁻ ions in film. Mass transfer may depend also on nucleation rate, which affects the Me²⁺ and S²⁻concentrations.

Also other components in synthesis gas, like CO₂, NH₃, are dissolved and reacted.

The pH of the ion system has to be within a specific range depending on the metal ion used. To take an example, for copper, i.e. Cu²⁺, pH should be approximately within the range of 1 to 5.2 to prevent precipitation of other components than CuS, such as CuCO₃, Cu(OH)₂, and (NH₄)₂SO₄ depending on the CuSO₄-water solution concentration and synthesis gas composition, and the total pressure and temperature.

Additionally H₂S is precipitated from liquid as sulphides with metal ions. Because the solubility of metal sulphides is very small, lean metal ion concentrations can be used and efficient precipitation is still achieved.

Precipitation of sulphides is a convenient and more advantageous way of purifying H₂S than traditional methanol wash, because it gives an additional driving force for mass transfer of H₂S from the gas to the liquid phase. This is due to the fact that H₂S, HS⁻ and S²⁻ concentrations in the liquid phase are kept small due to the precipitation of S²⁻ as metal sulphide. Using an acidic wash solution, also ammonia can be washed out from the gas. The present process can be used in a plant producing hydrocarbon compositions which are suitable as such as diesel fuels or which can be processed into diesel fuels. The washing is carried out in a multi-stage process, for example by counter-current washing. In that embodiment, an aqueous effluent can be withdrawn which is in practice totally free from metal ions derived from the washing liquid and which can be conducted to further treatment in a conventional waste water processing plant.

Next, the present invention will be examined in more detail with the aid of a detailed description and referring to the attached drawing of a wash column for removal of impurities, such as H₂S, NH₃ and COS from synthesis gas for FT synthesis.

### Brief Description of the Drawings

Figures 1 to 3 relate to Example 1:
   Figure 1 illustrates an experiment comprising gas contacting with absorbent solution, here aqueous CuSO₄ solution, binding H₂S thereto. In the figure, a ratio of H₂S mole flow in the wash bottle outlet/ H₂S mole flow in the wash bottle inlet as a function of time [h:min] is disclosed; the experiment was started at 9:33 and last point measured at 15:11;
   Figure 2 illustrates an experiment similar to the one discussed above with respect to Figure 1, comprising gas contacting with absorbent solution, here aqueous CuSO₄ solution, binding H₂S thereto. In the figure, a ratio of H₂S mole flow in the wash bottle outlet/ H₂S mole flow in the wash bottle inlet as a function of time [h:min] is disclosed; the experiment was started at 9:53;
   Figure 3 illustrates a further experiment similar to the one of Figure 1, comprising gas contacting with absorbent solution, here aqueous CuSO₄ solution, binding H₂S thereto. In the figure, a ratio of H₂S mole flow in the wash bottle outlet/ H₂S mole flow in the wash bottle inlet as a function of time [h:min] is disclosed; the experiment was started at 10:43;

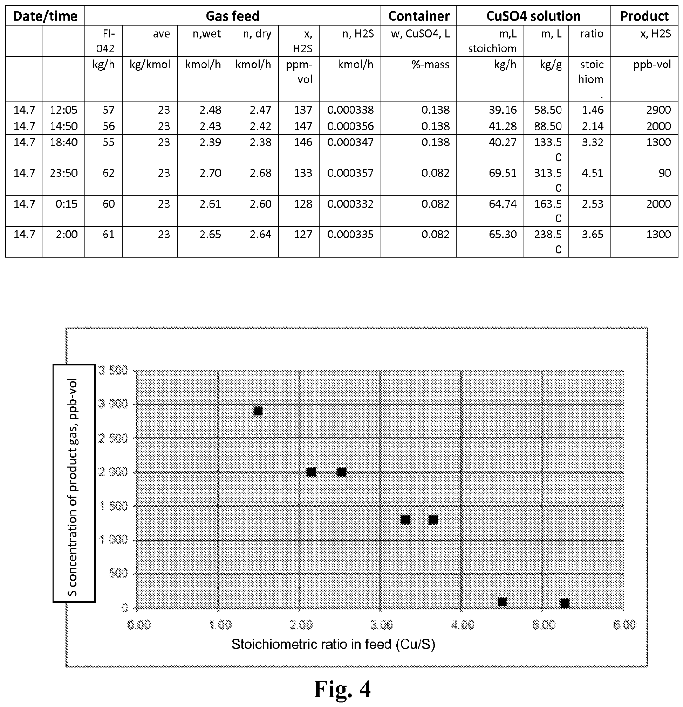

   Figure 4 shows the various gas concentrations of Example 2 and the effluent gas S concentration as a function of the stoichiometric ratio of Cu/S in the feed;
   Figure 5 is the flow sheet of an embodiment of the invention; and
   Figure 6 shows in side-view the structure of a spray chamber as discussed in more detail in Example 3.

### Detailed Description of Preferred Embodiments

For the sake of order it should be pointed out that the preferred embodiments are discussed with particular reference to copper sulphate as an absorbing metal salt compound. Although copper sulphate is very efficient and preferred in many embodiments, the other salts mentioned below can also be used in the same embodiments.

To the extent that numerical values and numerical ranges are indicated it should be noted that the approximate ("about") values are to be interpreted as also including the exact values.

As mentioned above, the present invention relates to purification of gas obtained by gasification of a biomass feedstock. In particular, the present invention provides a method of purifying gasification gas (syngas) by absorbing impurities of syngas in a liquid absorption medium containing metal ions capable of binding sulphide ions into solid sulphides which have low solubility and which can therefore be precipitated from the solution. The present invention carried out by contacting the gas with an acidic aqueous wash solution containing transition metal ions capable of binding to sulphide ions of the sulphide compounds present in the gas. The concentration of the transition metal cations can be small, for example the aqueous solution has a concentration in respect of the transition metal ions of about 0.00001 M to about 0.1 M, e.g. about 0.00001 M to about 0.01 M, in particular 0.00001 M to 0.01 M. A significant portion of the sulphide impurities present and contained in the gas can be converted into the form of transition metal sulphide compounds. The sulphide compounds thus formed are preferably precipitated into the wash solution whereby the sulphide impurities are removed from the gas. The purified gas so obtained is separated from the aqueous solution.

Preferably a significant portion of the hydrogen sulphide impurities contained in the gas are bound into practically insoluble (i.e. sparingly soluble) transition metal sulphide compounds.

In a preferred embodiment, the metal ions, i.e. cations, of the wash solution are derived from transition metals selected from the group of copper, zinc, iron and cobalt and mixtures thereof, in particular from copper, zinc and iron and mixtures thereof. Advantageously, the metal ions of the wash solution comprise bivalent metal cations of copper, zinc and iron and mixtures thereof.

The transition metal ions are obtained from water soluble metal salts by dissolving said salts in water. In one embodiment, the aqueous solution is prepared by dissolving about 1 to about 10,000 parts, preferably about 50 to about 5,000 parts by weight of a metal salt into 1,000,000 parts by weight of water.

The concentration of the aqueous wash solution is typically about 0.00005 M to about 0.005 M, preferably about 0.0001 M to about 0.001 M.

For the preparation of suitable wash solutions the water soluble metal salts of the above mentioned cations can comprise an anion selected from the group of anions derived from inorganic acids, such as sulphate, sulphite, phosphate, phosphite, nitrate, chloride and carbonate and mixtures thereof. Anions derived from simple organic acids (typically of the kind having no more than 10 carbon atoms for example 6 or less carbon atoms) are also possible. Examples of such anions are citrate, malonate and acetate and mixtures thereof.

Based on the above, specific non-limiting examples of anions include the following: sulphate, sulphite, bisulphite, thiosulphate, chloride, iodide, phosphate, monobasic phosphate, dibasic phosphate, hypophosphite, dihydrogen pyrophosphate, carbonate, bicarbonate, metasilicate, citrate, malate, maleate, malonate, succinate, lactate, formate, acetate, butyrate, propionate, benzoate, tartrate, ascorbate and gluconate.

With reference to the above, in a particularly preferred embodiment, the combinations of the metal cations and anions are selected such that the metal salt obtained is water soluble. The salt may also be a hydrated salt. Such salts are typically crystalline salt hydrates with one or more bonded water molecules of crystallization.

CuSO₄ solution can be prepared either by dissolving CuSO₄ powder in water or reacting CuO powder with a solution of H₂SO₄ and water. In the first case, H₂SO₄ formed has to be removed from any circulating washing fluid. In the second case H₂SO₄ formed will react with CuO producing the desired Cu²⁺ and SO₄²⁻ ions. Additionally metallic Cu powder with H₂SO₄ water solution produces CuSO₄ water solution and hydrogen. The aqueous wash solution is acidic or weakly acidic; preferably it has a pH of about 1 to about 6.5, in particular about 1 to about 5. The pH will vary within the indicated range depending on the metal cations.

Generally, the gas is contacted with the wash solution at a temperature in the range of 10 and 80 °C and at a pressure in the range from 1 to 50 bar (absolute pressure). Thus, the washing can be carried out at ambient temperature and pressure (20 to 25 °C and 1 bar(a)), although it is equally possible to work the present technology at lower temperatures (10 to <20 °C) and at elevated temperatures (>25 to 80 °C). The pressure can be in excess of 1 bar(a), for example about 1.5 to about 50 bar(a).

Typically, the syngas obtained from gasification is recovered at higher temperature than indicated in the preceding. Therefore, in one embodiment, the gasification gas is cooled to a temperature in the above indicated range (10 to 80 °C) before being contacted with the washing liquid. It is possible to recover some of the heat contained in the gasification gas by contacting it with a cooling media, for example with cooling water, in a heat exchanger. The molar ratio of metal cation to sulphide compounds of the gas to be purified (i.e. Me²⁺/S ratio of the feed) is typically in excess of 1, preferably about 1.4 to about 6, in particular about 1.5 to about 5.5, advantageously about 2 to about 4.5.

There are several options for contacting of syngas with the washing liquid/absorption medium as will appear from the working embodiments discussed below.

In a first preferred embodiment, the contacting of the syngas with the absorption medium takes place by spraying or atomizing the absorption medium into the gas. Preferably, the contacting of the syngas with the absorption medium takes place in the interface between the gas and droplets of the absorption medium.

In a second preferred embodiment, the gas to be purified is bubbled into a stirred tank containing the absorption solution. This embodiment of an alternative process concept is described more in detail in Example 1.

In a third embodiment, absorption towers with plates and/or packing can be used in a counter-current operation. The detailed equipment type depends on the concentration of the metal ions in the solution and the amount and impurity content of the gas.

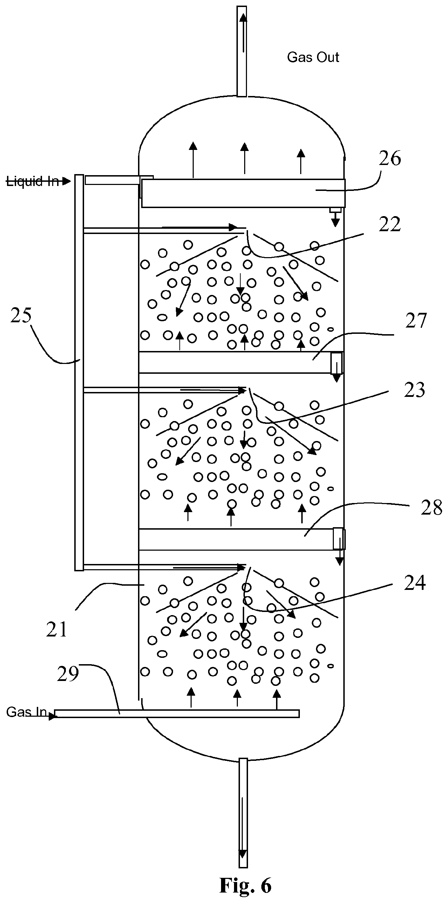

One way of performing the chemical absorption process is to use the chemical spray absorption concept combined with sieve tray(s) above the spray chamber section(s) as described and shown in Example 3 and in Figure 6.

Thus, in one particular embodiment based on the spray chamber approach, the wash solution is contacted with the gas in a spray chamber having an essentially vertical central axis, said gas being fed into the spray chamber from the bottom or from the top and withdrawn from the opposite end so as to advance in the direction of the central axis of the spray chamber. The wash solution is fed through spray nozzles arranged as one or more spray zones in series along the central axis at different heights in the spray chamber. In a preferred embodiment there are 1 to 10 spray zones, for example 2 to 5 spray zones in the contacting device.

The gas is fed into a spray chamber, for example of the preceding type, via gas distributors arranged below the lowest spray zone, and the metal sulphide is withdrawn from the absorber along with the used wash liquid via an outlet arranged in the bottom part of the chamber.

After absorption, the metal sulphide is separated and taken to further treatment. To mention one specific example in which copper sulphate is used as a water-soluble salt for preparing the present wash solution: Almost all of the Cu²⁺-ions from the CuSO₄ wash unit will be precipitated as CuS-crystals and removed by filtration from wash liquid effluent.

After adsorption of the sulphides, CuS-crystals and CuSO₄-water slurry are separated from circulated wash liquid and they can be fed into the lower wash section with additional water. Part of synthesis gas is fed into the lower wash column, where almost all of Cu-ions in the effluent wash liquid will be precipitated.

In the above embodiments, the wash solution contains less than 1500 wt-ppm as metal, for example less than 500 wt-ppm, preferably about 10 to about 450 wt-ppm, for example 15 to 400 wt-ppm, of a copper salt, in particular copper sulphate.

A transition metal ion washing unit can also consist of two Me²⁺ water wash sections (named following the direction of the gas flow), wherein a first section is operated with an aqueous wash dilute with Me²⁺ ions and a second section is operated with another aqueous wash rather highly concentrated with Me²⁺ ions. The necessary amount of Me²⁺ ions is fed in the form of an aqueous Me²⁺ solution into the second section and circulated. Synthesis gas from the first wash section will be fed into the second wash section where almost all of the H₂S in the synthesis gas will be removed by counter-current wash.

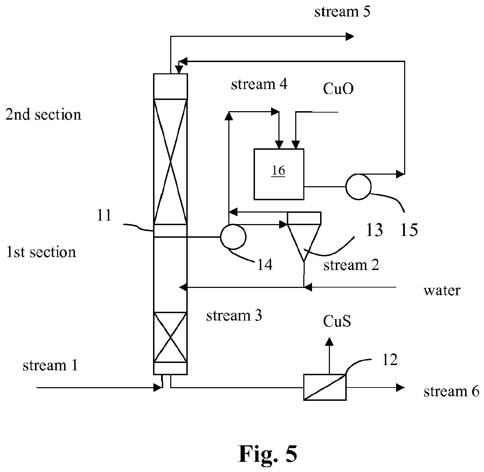

This process is illustrated in Figure 5.

The first and the second section(s) can be arranged along a vertical axis of a contacting zone or device one above the other. In one embodiment, the second section(s) is/are placed above the first section(s).

The necessary amount of Cu²⁺-ions is fed in the form of a CuSO₄-water solution into the second wash section and circulated (stream 4). Synthesis gas from the first wash section will be fed into the second wash section where almost all of H₂S in synthesis gas will be removed by counter-current wash, as also shown in Figure 5.

Thus, in the above disclosed multiple-stage process, in a first stage, the inlet gas is contacted with a washing liquid which is "lean" in the sense that it contains less than a stoichiometric amount of metal ions with respect to the sulphide compounds present. In a last stage of the process, the gas treated is contacted with a washing liquid which contains an excess of metal ions with respect to the sulphide compounds present in the gas. There can be 2 to 30 washing stages, typically however there are 2 to 10, in particular 2 to 5. In these embodiments, the wash solutions contain as metal, just as above, typically less than 1500 wt-ppm, for example less than 500 wt-ppm, preferably about 10 to about 450 wt-ppm, of a copper salt, in particular copper sulphate, the actual concentration being determined based on the sulphide concentration in the gas to be treated in the various stages.

As mentioned earlier, by a process of the above kind, an aqueous effluent can be withdrawn from the first gas wash stage which is in practice totally free from metal ions derived from the washing liquid and which can be conducted to further treatment in a conventional waste water processing plant.

The purification results using transition metal ions in aqueous washing liquids are very good. The present method is capable of removing a significant portion of the hydrogen sulphide from the gas. At least 95 % preferably at least 98 % advantageously at least 99.5 % of the hydrogen sulphide is removed from the gas.

As a result, in a preferred embodiment, the concentration of hydrogen sulphide of the purified gas is less than about 100 ppb by volume, in particular less than about 50 ppb by volume.

The purified gas has several uses. It can be used for producing hydrogen, methanol, ethanol, dimethyl ether or aldehydes optionally by hydroformulation or directly used in engines for producing for example electricity. Also it can be used for SNG (Synthetic Natural Gas) production.

The purified gas can also be used for producing a hydrocarbon composition containing C₄-C₉₀ hydrocarbons, optionally after further purification. In particular, the hydrocarbon composition can be produced by a Fischer-Tropsch (FT) process.

The gas purification step can be integrated into an FT-process such that the process comprises the steps of
- first gasifying the raw-material, e.g. by oxygen blown gasification, to produce a gas containing as main components carbon monoxide, carbon dioxide, hydrogen and hydrocarbons possibly together with inert components and as minor component impurities selected from hydrogen sulphide, hydrogen chloride, ammonia, hydrogen cyanide and carbonyl sulphide and mixtures thereof;
- then feeding the gas obtained by gasification of the raw-material into a reformer;
- reforming the gas in order to decrease the content of the hydrocarbons in a gaseous effluent of the reformer and simultaneously converting the tar components into CO, CO₂ and water;
- withdrawing the gaseous effluent from an outlet of the reformer;
- optionally adjusting the hydrogen-to-carbon monoxide ratio of the purified gas;
- removing a significant portion of the impurities from the gas by contacting the gas with a wash solution consisting of an acidic, lean solution of transition metal ions in water;
- withdrawing the purified gas;
- optionally adjusting the hydrogen-to-carbon monoxide ratio of the purified gas, and
- feeding the gas thus obtained into a Fischer-Tropsch reaction zone to produce a hydrocarbon composition in the presence of a catalyst.

Preferably a copper salt is dissolved into an aqueous solution for providing the wash liquid for the above application. The concentration of the copper salt, such as copper sulphate, in the wash solution is preferably 1500 ppm-wt or less, in particular 100 to 1200 ppm-wt, in one embodiment less than 1000 wt-ppm, in particular about 10 to about 450 wt-ppm.

For all of these applications, the gas obtained by oxygen blown gasification of biomass usually contains carbon monoxide, carbon dioxide, hydrogen and hydrocarbons possibly together with inert components.

The organic raw-material or feedstock of the process is preferably a material composed of biological matter, i.e. of a matter of vegetable or animal origin. In the present context, the term "biomass" will be used for designating any such raw-material.

A typical feature of the feedstock materials of the present process is that they contain carbon, in particular in excess of about 20 %, preferably in excess of about 30 %, advantageously in excess of about 40 % by dry matter. The biomass feedstock is preferably selected from annual or perennial plants and parts and residues thereof, such as wood, wood chips and particles (saw dust etc), forestry residues and thinnings; agricultural residues, such as straw, olive thinnings; energy crops, such as willow, energy hay, *Miscanthous*; and peat.

However, it is also possible to use various waste materials, such as refuse derived fuel (RDF); wastes from sawmills, plywood, furniture and other mechanical forestry wastes; and waste slurries (including industrial and municipal wastes). In addition to such materials of vegetable origin, various animal products such as fats and waxes can also be used.

Also, pyrolysis oil produced from biomass and waste liquors from pulping process are a suitable bio-based feed for gasification.

The biomass is generally gasified in a oxygen blown gasifier either in a fluidized bed reactor or a circulating fluidized bed reactor (CFB) at a temperature in the range of about 500 to about 900 °C. The circulating bed is formed by a granular or particulate bed material, such as alumina-silicate (e.g. sand) or a similar inorganic material. The biomass is preferably milled or grinded to an average particle or granule size of less than about 5 mm, preferably less than about 2 mm, in particular not more than 1 mm before gasification. It is typically fed into the reactor with a moisture content of less than 15 % by weight, preferably to 10 % by weight or less. Gasification can be promoted by feeding steam, air or oxygen into the reactor, particularly advantageous results being obtained with oxygen and oxygen in combination with steam.

Depending on the biomass and the temperature and on the concentration of oxygen, the "carbon conversion", i.e. conversion of elemental carbon contained in the raw-material into light compounds, hydrocarbons and tar, is higher than 70 %, preferably higher than 75 %, in particular in excess of 80 % by weight of the carbon in the raw-material.

By gasification, a gas containing carbon monoxide, hydrogen and carbon dioxide as main components along with some water or steam is produced. The gas is recovered. It can be used in the Fischer-Tropsch process for producing hydrocarbons by reacting carbon monoxide with hydrogen in the presence of a catalyst for converting at least a significant part of the carbon monoxide and hydrogen contained in the gas into a hydrocarbon composition containing C₄-C₉₀ hydrocarbons. The hydrocarbon composition thus obtained is recovered and subjected to further processing.

In case of waxes and similar hydrocarbons which are solid or semi-solid at ambient temperature and, generally, and also in case of any high-molecular weight hydrocarbons, the FT hydrocarbon composition is preferably further processed by hydrotreatment, such as hydroisomerization, with hydrogen gas at an increased temperature in the presence of a catalyst in order to produce a hydrocarbon composition suitable as a diesel class hydrocarbon or as composition from which such a hydrocarbon can be produced. Typically, hydrotreatment (e.g. hydroisomerization) with hydrogen gas is performed at a temperature of about 300 °C in a fixed bed reactor. The catalyst is typically a supported or unsupported metal catalyst, e.g. nickel on carbon.

In a conventional gasification reactor, a product gas exhibiting a molar ratio of hydrogen to carbon monoxide of 0.5 to 1.5 is produced. In particular, gasification of a wood, annual plant or peat raw-material will upon gasification in the presence of oxygen gas yield a product gas in which the molar ratio of hydrogen to carbon monoxide is about 0.8 to about 1.1. In practice, the molar ratio of hydrogen-to-carbon monoxide needs to be raised to about 2 before the FT reaction. For this reason, there is a need for a separate step in which the ratio is increased, said step being carried out at the latest immediately before or even simultaneously with the Fischer-Tropsch reaction.

The step of contacting the gas with the wash solution is preceded by at least one purification step of the gas. This embodiment can be combined with any of the embodiments described above.

At least one of the preceding purification steps is advantageously selected from the group of filtration, membrane filtration, pressure swing absorption and washing with a liquid capable of, for example, absorbing carbon dioxide.

### Experimental part

### Example 1

### Semibatch absorption tests of H₂S removal, using aqueous copper sulfate (CuSO₄) as a model absorbent

### Materials and methods

The absorption experiments were carried out using a micro reactor equipment for WGS rection.

Semibatch absorption tests of H₂S removal, using copper sulfate (CuSO₄)-water solution as absorbent, were carried out in a simple 0.5 liter gas-wash bottle with magnetic stirring, placed in the product line of a micro reactor before the online mass spectrometer.

Absorption tests were carried out at room temperature and atmospheric pressure. Total gas feed flow was 12 dm³/h to the WGS reactor. The basic gas feed composition is shown in Table 1.

**Table 1. Basic feed composition.**

| **Total flow** | **H₂O** | **CO** | **CO₂** | **H₂** | **N₂** | **CH₄** |
|---|---|---|---|---|---|---|
| litre(NTP)/h | vol-% | vol-% | vol-% | vol-% | vol-% | vol-% |
| 12.0 | 36 | 12 | 22 | 24 | 5 | 1 |

The impurity components were purchased from AGA as dilute hydrogen mixture gases H₂S/H₂, COS/H₂ and NH₃/H₂. In the feed, H₂S concentration was 500 ppm (vol) in all experiments. In some tests also 85 ppm (vol) COS and 800 ppm (vol) NH₃ were used in the feed. However, nearly all COS was hydrolyzed already before the absorption bottle as it was not possible to bypass the catalytic reactor, where COS hydrolysis took place as a side reaction of water gas shift reaction.

The product gas was analyzed online using a mass spectrometer (GC-MS but GC separation not in use). The quantitation limit is dependent on the component, and in these MS measurements quantitation limit was about 1 ppm.

In absorption experiments carried out in laboratory in a bubbled gas wash bottle described above the following test programme was carried out as follows:
- The CuSO₄ concentration varied in different experiments from dilute 50 ppm up to 500 ppm. The mass transfer in the bubbled gas wash bottle was enhanced by agitation.
- Absorption rate of H₂S in CuSO₄-water solution was measured at different CuSO₄ concentrations.
- Definition of crystallized Cu-solid components and particle size distribution of crystallized particles.

### Results

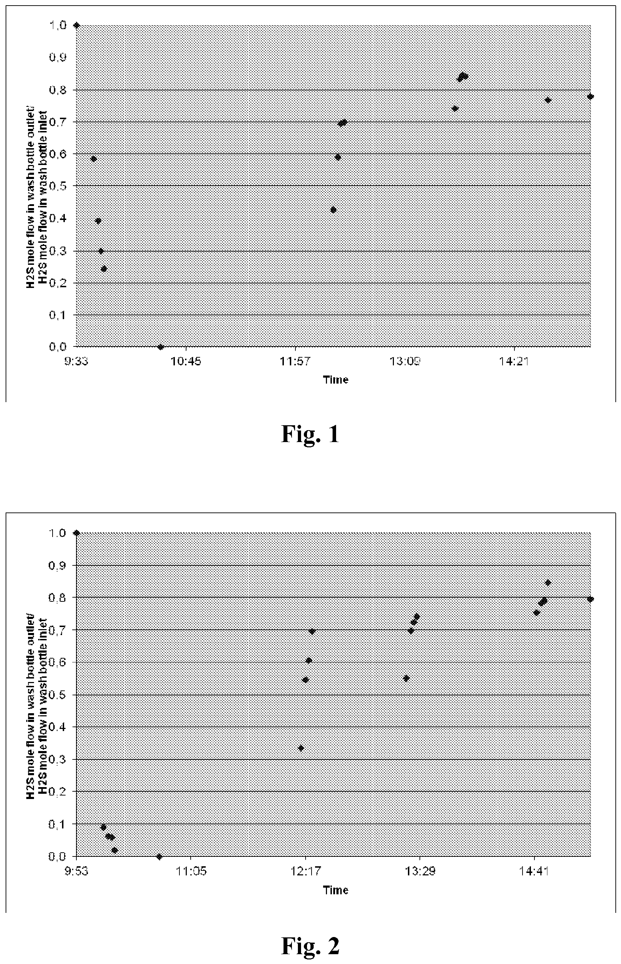

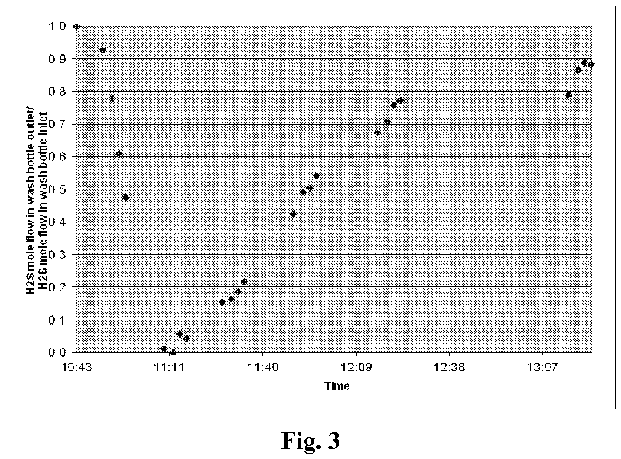

The feed rates of different impurity components in synthesis gas entering WGS reactor in the experiments were:
▪ Test 1 - CuSO₄ conc. 0.01wt-%, H₂S concentration in feed gas 500 ppmᵥ
▪ Test 2 - CuSO₄ conc. 0.01wt-%, H₂S concentration in feed gas 500 ppmᵥ, NH₃ 800 ppmᵥ, COS 85 ppmᵥ
▪ Test 3 - CuSO₄ conc. 0.0051wt-%, H₂S concentration in feed gas 500 ppmᵥ, NH₃ 800ppmᵥ, COS 85 ppmᵥ
▪
H₂S mole flow in wash bottle outlet / H₂S mole flow in wash bottle inlet in different experiments is shown as a function of time in Figures 1-3:

### Conclusions

CuSO₄ was capable of removing 500 ppm H₂S (mol-frac) completely from feed gas both with 0.01 and 0.005 wt-% water solutions. The product is solid CuS deposit. Too high pH resulted in deposition of e.g. metal hydroxides or carbonates in which case no or less hydrogen sulphide was removed. Carbonate formation was also dependent on CO2 partial pressure. Too low pH resulted in no deposit formation in which case no hydrogen sulphide was removed (results not shown). NH₃ in the feed did not influence H₂S removal by copper sulfate.

With regard to the results described in the figures it should be pointed out that the experimental setup was the following: the bottle of copper sulphate wash solution was placed between two reactor product coolers and drum type volumetric gas flow meter. By opening the valves the gas could be made to flow through the CuSO₄ water solution and after that to the GC-MS, and subsequently the gas was conducted to the drum type volumetric gas flow meter for venting. The first point shown graphically is from the point of time immediately before the gas was conducted to the CuSO₄ bottle. At that point of time, precipitation of CuS is not detectable yet. Then, a 4 sample series was taken within 7 minutes, after a short break a new series of 4 samples was taken within 7 minutes etc.

The points in the figures in which the H₂S concentration is 0 indicate points where all H₂S is removed fom the gas. Suddenly after that all the copper is depleted and the H₂S concentration increases again.

Some of the tests have contained COS in the feed. Having passed the WGS reactor it has in practice been completely hydrolyzed since the feed also contains water:

COS + H₂O <---> H₂S + CO₂

Then, there is more H₂S in the feed of the CuSO₄ washing than the amount of H₂S fed into the system. This effect could be seen in the analysis in the amount of effluent COS 0-3 ppmᵥ.

### Example 2. Absorption test for H₂S removal from syngas in packed bed absorption column.

Absorption tests for H₂S removal from syngas in packed bed absorption column were carried out in a Pilot scale test unit. The absorber performance was tested in a syngas preparation plant in Varkaus, Finland.

Absorber details and data sheets are shown below:
Absorber:
   - packed bed absorber, packing metal, 2-in or 50 mm, surface area 100 m²/m³,
   - height: 9 m, diameter 0.1 m.
Feed Gas:
   - feed rate: 50-60 kg/h
   - pressure 30 bar, temperature 25 °C
   - Composition/mol-%: CO 21, CO₂ 30, H₂ 31, CH₄3, N₂ 15, H₂S 140 ppm, naphthalene 100 ppm, benzene 1200 ppm and traces NH₃ and COS.
Absorbent Feed:
   - CuSO4 -water, concentration 0.15 wt-%
   - Feed rate was varied, equivalent Cu²⁺ molar feed ratio to H₂S 1.5-6

The mol-% of H₂S in effluent gas was measured by on-line hydrogen sulphide gas analyses. The measured H₂S mole fraction in effluent syngas was at minimum 70 ppb at equivalent Cu²⁺ molar feed ratio to H₂S value of 6.

As a result, the correlation between product gas S concentration and stoichiometric Cu/S ratio in the feed was determined. For stoichiometric ratios from 1 to 5 almost linear correlation was observed, wherein the stoichiometric ratio of 1.5 for Cu/S led to less than 3 ppmᵥ H₂S and ratio 5 led to 90 ppbᵥ H₂S in the product gas.

### Example 3

### Wash absorption column for H₂S removal

A wash absorption column can be designed as shown in attached Figure 6. In the following the process will be described with particular reference to the embodiment of the drawing, although it should be pointed out that the specific details of the wash absorption column are not to be construed limiting for the use of a wash absorption column in the present invention.

A wash absorption column 21 consists of sieve plate demister unit 25 followed by spray absorption section and gas inlet distributor 29 in the bottom part of the spray chamber. The column may have sieve plate 26, 27 and 28, as indicated, and spray sections 22, 23 and 24 in series to enhance wash and absorption efficiency.

Very lean CuSO₄-water solution, less than 500 weight -ppm is fed into the spray chamber 21 on a sieve plate 26 on the top of the chamber and sprayed into the spray chamber below the sieve plate by specific spray nozzle system 22, where effective mass transfer between sprayed liquid droplets and gas takes place. Sulphur components are reacting in liquid phase rapidly with Cu²⁺ at very small ion concentrations.

The spray nozzle system is specially designed to enable homogenous dense CuSO₄-water droplet phase having effective contact with entering synthesis gas.

The nozzles are preferably operating in series at different height levels in the column. Synthesis gas described above is fed into the reactor via gas distributors 29 from the bottom part of the chamber. The H₂S molecules in the synthesis gas are contacting effectively the sprayed liquid droplets enabling effective mass transfer of H₂S into liquid phase and fast reaction with Cu²⁺ ions in droplets generating CuS and H₂SO₄ according to reaction:

CuSO₄+ H₂S = CuS + H₂SO₄

Most of the liquid as sprayed droplets are hitting the chamber wall and falling down to the bottom.

A part of the sprayed small droplets are entrained up with the gas to be separated from the gas on tray plate on the top of the spray chamber.

CuS is separated as crystallized solid in CuS separation unit. The separation unit could be CuS-settling basin, hydrocyclone, and centrifuge or filtration unit.

The exhaust gas after H₂S absorption process contains less than 50 ppb vol H₂S, and no extra guard beds for additional H₂S removal for FT-synthesis are necessarily needed.

Instead of Cu-ions also other metals that form sulphides of very low solubility can be used. Iron and zinc are such. Used FT catalysts (Fe, Co) can be utilised.

Advantages of using a wash absorption column:
A number of advantages are obtained using a wash absorption column in general, including the specific wash absorption column shown in the drawing. Thus, very low concentrations of Cu²⁺-ions react fast with H₂S in liquid phase. This fact allows very effective and
profitable process concept for removal of H₂S and other impurities mentioned above from syngas down to less than 20 ppb by volume. H₂S is chemically reacted with CuSO₄ forming solid CuS and sulphuric acid. CuS is easy to be separate as a solid to be utilized as a raw material in copper industry. CuS formed can be used in the preparation of metallic copper or other copper compounds. The herein disclosed H₂S removal process is very effective and no extra H₂S removal beds are needed for FT-synthesis. A spray unit allows effective mass transfer of H₂S into droplets and relatively low reactor size. Most of the effective mass transfer takes place immediately after spraying.

## Claims

1. A method of purifying gas obtained by gasification of a biomass feedstock to produce a gas containing a main component selected from carbon monoxide, carbon dioxide, hydrogen, hydrocarbons and mixtures thereof and a minor component selected from hydrogen sulphide and optionally from the group of hydrogen chloride, ammonia, carbonyl sulphide, hydrogen cyanide and mixtures thereof, comprising the steps of
- contacting the gas with an acidic aqueous wash solution of transition metal ions capable of binding to sulphide ions,
- binding a significant portion of the hydrogen sulphide impurities contained in the gas into practically insoluble transition metal sulphide compounds to remove hydrogen sulphide impurities from the gas; and
- separating the thus obtained purified gas from the aqueous solution;
H₂S removal from the gas being carried out by washing effected in a multi-stage process, wherein in a first stage, the inlet gas of the first stage is contacted with a washing liquid which contains less than a stoichiometric amount of metal ions with respect to the sulphide compounds present, and in a second stage of the process, the gas treated is contacted with a washing liquid which contains an excess of metal ions with respect to the sulphide compounds present in the gas.

2. The method according to claim 1, wherein the metal sulphide produced is precipitated in the aqueous solution and optionally recovered.

3. The method according to claim 1 or 2, wherein the metal ions of the wash solution are derived from transition metals selected from the group of copper, zinc, iron and cobalt and mixtures thereof, in particular from copper, zinc and iron and mixtures thereof, preferably the metal ions of the wash solution comprise bivalent metal ions of copper, zinc and iron and mixtures thereof, and wherein preferably the aqueous wash solution has preferably a pH of about 1 to about 6.5, in particular about 1.5 to about 5.5.

4. The method according to any of claims 1 to 3, wherein the aqueous solution is prepared by dissolving about 1 to 10,000 parts, preferably about 50 to 5,000 parts by weight of a metal salt into 1,000,000 part by weight of water.

5. The method according to any of claims 1 to 4, wherein the concentration of the aqueous wash solution in respect of the transition metal ion(s) is 0.00001 M to 0.1 M, for example 0.00001 M to 0.01 M, typically about 0.00005 M to 0.005 M preferably about 0.0001 M to 0.001 M .

6. The method according to any of claims 1 to 5, wherein the molar ratio of the metal ion to sulphide compounds of the gas to be purified is in excess of about 1, preferably about 1.4 to about 6, in particular about 1.5 to about 5.5, advantageously about 2 to about 4.5.

7. The method according to any of the preceding claims, wherein the step of contacting the gas with the wash solution comprises spraying droplets of the wash solution into the gas, maintained in gaseous phase, and precipitating the absorbed sulphur compound in the form of solid metal sulphide in the droplets of the wash solution, and wherein preferably the wash solution is contacted with the gas in a spray chamber having an essentially vertical central axis, said gas being fed into the spray chamber so as to advance in the direction of the central axis of the spray chamber and the wash solution being fed through spray nozzles arranged in as one or more spray zones in series along the central axis at different heights in the spray chamber.

8. The method according to claim 7, wherein the gas is fed into the spray chamber via gas distributors arranged below the lowest spray zone, and the metal sulphide is withdrawn from the reactor along with the used wash liquid via an outlet arranged in the bottom part of the chamber.

9. The method according to any of claims 1 to 8, wherein the wash solution contains less than 1500 wt-ppm as metal, preferably less than 1000 wt-ppm, in particular about 10 to about 450 wt-ppm, of a copper salt, advantageously copper sulphate.

10. The method according to any of claims 1 to 9, wherein a significant portion of the hydrogen sulphide is removed from the gas, in particular at least 95 %, preferably at least 98 %, advantageously at least 99.5 %, of the hydrogen sulphide is removed from the gas.

11. The method according to any of the preceding claims, wherein the concentration of hydrogen sulphide of the purified gas is less than about 100 ppb by volume, in particular less than about 50 ppb by volume.

12. The method according to any of the preceding claims, wherein the gas is contacted with the wash solution at a temperature in the range of 10 and 80 °C and at a pressure in the range from 1 to 50 bar(a), and wherein preferably the step of contacting the gas with the wash solution is preceded by at least one purification step of the gas.

13. The method according to any claims 1 to 12, wherein H₂S removal from the gas is carried out by washing effected in a multi-stage process by counter-current washing.

14. The method according to any of the preceding claims, wherein the purified gas is used for producing hydrogen, SNG (synthetic natural gas), methanol, dimethyl ether or aldehydes optionally by hydroformulation, or the purified gas, optionally after further processing steps, is used for producing a hydrocarbon composition containing C₄-C₉₀ hydrocarbons, for example the purified gas, optionally after further processing steps, is used for producing a hydrocarbon composition by a Fischer-Tropsch process.

15. The method according to claim 14, comprising the steps of
- gasifying the biomass feedstock to produce a gas containing as main components carbon monoxide, carbon dioxide, hydrogen and hydrocarbons possibly together with inert components and as minor component impurities selected from hydrogen sulphide, hydrogen chloride, ammonia, hydrogen cyanide and carbonyl sulphide and mixtures thereof;
- feeding the gas obtained by gasification of the biomass feedstock into a reformer;
- reforming the gas in order to decrease the content of hydrocarbons in a gaseous effluent of the reformer;
- withdrawing the gaseous effluent from an outlet of the reformer;
- optionally adjusting the hydrogen-to-carbon monoxide molar ratio of the purified gas;
- removing a significant portion of the impurities from the gas by contacting the gas with a wash solution consisting of a lean solution of transition metal ions in water;
- withdrawing the purified gas;
- optionally adjusting the hydrogen-to-carbon monoxide molar ratio of the purified gas, and
- feeding the gas thus obtained into a Fischer-Tropsch reaction zone,
wherein the concentration of copper salt, such as copper sulphate, in the wash solution is preferably 1500 ppm-wt or less, in particular 100 to 1200 ppm wt as copper.

16. The method according to claim15, comprising producing a hydrocarbon composition which is solid or semi-solid at ambient temperature and further processing the hydrocarbon composition by hydrotreatment, such as hydroisomerization, with hydrogen gas at an increased temperature in the presence of a catalyst in order to produce a hydrocarbon composition suitable as a diesel class hydrocarbon or as composition from which such a hydrocarbon can be produced.

## Patentansprüche

1. Verfahren zur Reinigung eines durch Vergasung eines Biomasserohstoffes erhaltenen Gases, um herzustellen ein Gas enthaltend einen Hauptbestandteil ausgewählt aus Kohlenstoffmonoxid, Kohlenstoffdioxid, Wasserstoff, Kohlenwasserstoffe und Mischungen davon und einen Nebenbestandteil ausgewählt aus Schwefelwasserstoff und optional aus der Gruppe von Chlorwasserstoff, Ammoniak, Kohlenoxidsulfid, Cyanwasserstoff und Mischungen davon, umfassend die Schritte von
- Kontaktieren des Gases mit einer sauren wässrigen Waschlösung von Übergangsmetallionen, die des Bindens an Sulfidionen fähig sind,
- Binden eines signifikanten Teils der in dem Gas enthaltenen Schwefelwasserstoffverunreinigungen in praktisch unlöslichen Übergangsmetallsulfidverbindungen um Schwefelwasserstoffverunreinigungen aus dem Gas zu entfernen; und
- Trennen des so erhaltenen gereinigten Gases aus der wässrigen Lösung;
H₂S Entfernen aus dem Gas wird ausgeführt durch Waschen durchgeführt in einem mehrstufigen Prozess, wobei in einem ersten Schritt das Einlassgas des ersten Schritts mit einer Waschflüssigkeit, welche weniger als eine stöchiometrische Menge an Metallionen in Bezug auf die anwesenden Sulfidverbindungen enthält, kontaktiert wird und in einem zweiten Schritt des Prozesses, das behandelnde Gas mit einer Waschflüssigkeit, welche einen Überschuss an Metallionen in Bezug auf in dem Gas anwesenden Sulfidverbindungen enthält, kontaktiert wird.

2. Verfahren nach Anspruch 1, wobei das hergestellte Metallsulfid in der wässrigen Lösung präzipitiert und optional wiedergewonnen wird.

3. Verfahren nach Anspruch 1 oder 2, wobei die Metallionen der Waschlösung abgeleitet sind von Übergangsmetallen ausgewählt aus der Gruppe von Kupfer, Zink, Eisen und Kobalt und Mischungen davon, insbesondere von Kupfer, Zink und Eisen und Mischungen davon, bevorzugt umfassen die Metallionen der Waschlösung zweiwertige Metallionen von Kupfer, Zink und Eisen und Mischungen davon, und wobei bevorzugt die wässrige Waschlösung aufweist bevorzugt einen pH von ungefähr 1 bis ungefähr 6,5, insbesondere ungefähr 1,5 bis ungefähr 5,5.

4. Verfahren nach einem der Ansprüche 1 bis 3, wobei die wässrige Lösung hergestellt wird durch Lösen von ungefähr 1 bis 10000 Gew.-Teile, bevorzugt ungefähr 50 bis 5000 Gew.-Teile eines Metallsalzes in 1000000 Gew.-Teile von Wasser.

5. Verfahren nach einem der Ansprüche 1 bis 4, wobei die Konzentration der wässrigen Waschlösung in Bezug auf das/die Übergangsmetallion(en) 0,00001 M bis 0,1 M, zum Beispiel 0,00001 M bis 0,01 M, typischerweise ungefähr 0,00005 M bis 0,005 M bevorzugt ungefähr 0,0001 M bis 0,001 M ist.

6. Verfahren nach einem der Ansprüche 1 bis 5, wobei das Molverhältnis des Metallions zu Sulfidverbindungen des zu reinigenden Gases im Überschuss von ungefähr 1, bevorzugt ungefähr 1,4 bis ungefähr 6, insbesondere ungefähr 1,5 bis ungefähr 5,5, vorteilhaft ungefähr 2 bis ungefähr 4,5 ist.

7. Verfahren nach einem der vorstehenden Ansprüche, wobei der Schritt des Kontaktierens des Gases mit der Waschlösung umfasst Sprühen von Tropfen der Waschlösung in das Gas, aufrecht erhalten in gasförmiger Phase, und Präzipitieren der absorbierten Schwefelverbindung in der Form von Festmetallsulfid in den Tropfen der Waschlösung, und wobei bevorzugt die Waschlösung kontaktiert wird mit dem Gas in einer Sprühkammer mit einer im Wesentlichen vertikalen Zentralachse, das Gas wird in die Sprühkammer zugeführt, um in Richtung der Mittelachse der Sprühkammer vorzurücken, und die Waschlösung wird durch Sprühdüsen zugeführt, die in einer oder mehreren Sprühzonen in Reihe entlang der Mittelachse in verschiedenen Höhen der Sprühkammer angeordnet sind.

8. Verfahren nach Anspruch 7, wobei das Gas in die Sprühkammer via unter der niedrigsten Sprühzone angeordneten Gasdistributoren zugeführt wird und das Metallsulfid von dem Reaktor zusammen mit der benutzten Waschflüssigkeit via eines in dem unteren Teil der Kammer angeordneten Auslasses zurückgezogen wird.

9. Verfahren nach einem der Ansprüche 1 bis 8, wobei die Waschlösung enthält weniger als 1500 Gew.-ppm als Metall, bevorzugt weniger als 1000 Gew.-ppm, insbesondere ungefähr 10 bis ungefähr 450 Gew.-ppm, eines Kupfersalzes, vorteilhaft Kupfersulfat.

10. Verfahren nach einem der Ansprüche 1 bis 9, wobei ein signifikanter Teil des Schwefelwasserstoffs von dem Gas entfernt wird, insbesondere zumindest 95%, bevorzugt zumindest 98%, vorteilhaft zumindest 99,5%, des Schwefelwasserstoffs von dem Gas entfernt wird.

11. Verfahren nach einem der vorstehenden Ansprüche, wobei die Konzentration des Schwefelwasserstoffs des gereinigten Gases weniger als ungefähr 100 Volumen-ppb, insbesondere weniger als ungefähr 50 Volumen-ppb ist.

12. Verfahren nach einem der vorstehenden Ansprüche, wobei das Gas kontaktiert wird mit der Waschlösung bei einer Temperatur in dem Bereich von 10 und 80°C und bei einem Druck in dem Bereich von 1 bis 50 Bar(a), und wobei bevorzugt dem Schritt des Kontaktierens des Gases mit der Waschlösung zumindest ein Reinigungsschritt des Gases vorausgegangen ist.

13. Verfahren nach einem der Ansprüche 1 bis 12, wobei, H₂S Entfernen aus dem Gas ausgeführt wird durch Waschen durchgeführt in einem mehrstufigen Prozess durch Gegenstromwaschen.

14. Verfahren nach einem der vorstehenden Ansprüche, wobei das gereinigte Gas zum Herstellen von Wasserstoff, SNG (synthetischem Erdgas), Methanol, Dimethylether oder Aldehyden optional durch Hydroformulierung verwendet wird, oder das gereinigte Gas, optional nach weiteren Verarbeitungsschritten, zum Herstellen einer Kohlenwasserstoffzusammensetzung enthaltend C₄-C₉₀ Kohlenwasserstoffe verwendet wird, zum Beispiel das gereinigte Gas, optional nach weiteren Verarbeitungsschritten, zum Herstellen einer Kohlenwasserstoffzusammensetzung durch einen Fischer-Tropsch-Prozess verwendet wird.

15. Verfahren nach Anspruch 14, umfassend die Schritte von
- Vergasung des Biomasserohstoffs um herzustellen ein Gas enthaltend als Hauptbestandteile Kohlenstoffmonoxid, Kohlenstoffdioxid, Wasserstoff und Kohlenwasserstoffe möglicherweise zusammen mit Inertbestandteilen und als Nebenbestandteil Verunreinigungen ausgewählt aus Schwefelwasserstoff, Chlorwasserstoff, Ammoniak, Cyanwasserstoff und Kohlenoxidsulfid und Mischungen davon;
- Einspeisen des durch Vergasung des Biomasserohstoffes erhaltenen Gases in einen Reformer;
- Reformieren des Gases um den Gehalt an Kohlenwasserstoffen in einem gasförmigen Abfluss des Reformers zu verringern;
- Zurückziehen des Gasabflusses von einem Ausfluss des Reformers;
- optional Anpassen des Wasserstoff-zu-Kohlenmonoxid-Molverhältnisses des gereinigten Gases;
- Entfernen eines signifikanten Teils der Verunreinigungen aus dem Gas durch Kontaktieren des Gases mit einer aus einer mageren Lösung an Übergangsmetallionen in Wasser bestehenden Waschlösung;
- Zurückziehen des gereinigten Gases;
- optional Anpassen des Wasserstoff-zu-Kohlenmonoxid-Molverhältnisses des gereinigten Gases, und
- Einspeisen des so erhaltenen Gases in eine Fischer-Tropsch-Reaktionszone,
wobei die Konzentration von Kupfersalz, wie z.B. Kupfersulfat, in der Waschlösung ungefähr 1500 Gew.-ppm oder weniger, insbesondere 100 bis 1200 Gew.-ppm als Kupfer ist.

16. Verfahren nach Anspruch 15, umfassend Herstellen einer Kohlenwasserstoffzusammensetzung, welche bei Umgebungstemperatur fest oder halbfest ist, und weiterer Verarbeitung der Kohlenwasserstoffzusammensetzung durch Hydrieren, wie z.B. Hydroisomerisierung, mit Wasserstoffgas bei einer erhöhten Temperatur in der Gegenwart eines Katalysators, um eine Wasserstoffzusammensetzung herzustellen, die als Kohlenwasserstoff der Dieselklasse geeignet ist oder als Zusammensetzung, aus der ein solcher Kohlenwasserstoff hergestellt werden kann.

## Revendications

1. Procédé de purification de gaz obtenu par gazéification d'une matière première de biomasse pour produire un gaz contenant un composant principal choisi parmi le monoxyde de carbone, le dioxyde de carbone, l'hydrogène, des hydrocarbures et des mélanges de ceux-ci et un composant mineur choisi parmi le sulfure d'hydrogène et optionnellement dans le groupe constitué de chlorure d'hydrogène, d'ammoniac, de sulfure de carbonyle, de cyanure d'hydrogène et de mélanges de ceux-ci, comprenant les étapes de
- mettre en contact le gaz avec une solution de lavage aqueuse acide d'ions de métaux de transition capables de se lier à des ions sulfures,
- lier une partie significative des impuretés de sulfure d'hydrogène contenues dans le gaz en composés de sulfures de métal de transition pratiquement insolubles pour éliminer les impuretés de sulfure d'hydrogène du gaz; et
- séparer le gaz purifié ainsi obtenu à partir de la solution aqueuse ;
l'élimination du H₂S du gaz étant réalisée par lavage dans un processus multi-étapes, dans lequel, dans une première étape, le gaz d'entrée de la première étape est mis en contact avec un liquide de lavage qui contient moins qu'une quantité stoechiométrique d'ions métalliques par rapport aux composés sulfures présents, et dans une seconde étape du processus, le gaz traité est mis en contact avec un liquide de lavage qui contient un excès d'ions métalliques par rapport aux composés sulfures présents dans le gaz.

2. Le procédé selon la revendication 1, dans lequel le sulfure métallique produit est précipité dans la solution aqueuse et éventuellement récupéré.

3. Le procédé selon la revendication 1 ou 2, dans lequel les ions métalliques de la solution de lavage sont dérivés de métaux de transition choisis dans le groupe constitué par le cuivre, le zinc, le fer et le cobalt et des mélanges de ceux-ci, en particulier par le cuivre, le zinc et le fer et des mélanges de ceux-ci, de préférence les ions métalliques de la solution de lavage comprennent des ions métalliques bivalents de cuivre, de zinc et de fer et des mélanges de ceux-ci, et dans lequel la solution de lavage a de préférence un pH d'environ 1 à environ 6,5, en particulier d'environ 1,5 à environ 5,5.

4. Le procédé selon l'une quelconque des revendications 1 à 3, dans lequel la solution aqueuse est préparée par dissolution d'environ 1 à 10 000 parties, de préférence d'environ 50 à 5 000 parties en poids d'un sel métallique dans 1 000 000 de parties en poids en eau.

5. Le procédé selon l'une quelconque des revendications 1 à 4, dans lequel la concentration de la solution de lavage aqueuse en ions du métal ou des métaux de transition est de 0,00001 M à 0,1 M, par exemple 0,00001 M à 0,01 M, typiquement d'environ 0,00005 M à 0,005 M, de préférence d'environ 0,0001 M à 0,001 M.

6. Le procédé selon l'une quelconque des revendications 1 à 5, dans lequel le rapport molaire entre les ions métalliques et les composés sulfures du gaz à purifier est supérieur à environ 1, de préférence d'environ 1,4 à environ 6, en particulier d'environ 1,5 à environ 5,5, avantageusement d'environ 2 à environ 4,5.

7. Le procédé selon l'une quelconque des revendications précédentes, dans lequel l'étape de mise en contact du gaz avec la solution de lavage comprend la pulvérisation de gouttelettes de la solution de lavage dans le gaz, maintenu en phase gazeuse, et la précipitation du composé soufré absorbé sous la forme de sulfure métallique solide dans les gouttelettes de la solution de lavage, et dans lequel la solution de lavage est de préférence mise en contact avec le gaz dans une chambre de pulvérisation ayant un axe central sensiblement vertical, ledit gaz étant introduit dans la chambre de pulvérisation de manière à avancer dans la direction de l'axe central de la chambre de pulvérisation et la solution de lavage étant introduite par l'intermédiaire de buses de pulvérisation disposées en une ou plusieurs zones de pulvérisation en série le long de l'axe central à différentes hauteurs dans la chambre de pulvérisation.

8. Le procédé selon la revendication 7, dans lequel le gaz est introduit dans la chambre de pulvérisation par l'intermédiaire de distributeurs de gaz disposés au-dessous de la zone de pulvérisation la plus basse, et le sulfure métallique est retiré du réacteur conjointement avec le liquide de lavage usagé par l'intermédiaire d'une sortie disposée dans la partie basse de la chambre.

9. Le procédé selon l'une quelconque des revendications 1 à 8, dans lequel la solution de lavage contenant moins de 1500 ppm en poids de métal, de préférence moins de 1000 ppm en poids, en particulier d'environ 10 à environ 450 PPM en poids d'un sel de cuivre, avantageusement du sulfate de cuivre.

10. Le procédé selon l'une quelconque des revendications 1 à 9, dans lequel une partie significative du sulfure d'hydrogène est éliminée du gaz, en particulier au moins 95 %, de préférence au moins 98 %, avantageusement au moins 99,5 %, du sulfure d'hydrogène est éliminé du gaz.

11. Le procédé selon l'une quelconque des revendications précédentes, dans lequel la concentration en sulfure d'hydrogène du gaz purifié est inférieure à environ 100 ppb en volume, en particulier inférieure à environ 50 ppb en volume.

12. Le procédé selon l'une quelconque des revendications précédentes, dans lequel le gaz est mis en contact avec la solution de lavage à une température dans la plage de 10 à 80°C et à une pression dans la plage de 1 à 50 bars(a), et dans lequel l'étape de mise en contact du gaz avec la solution de lavage est précédée par au moins une étape de purification du gaz.

13. Le procédé selon l'une quelconque des revendications 1 à 12, dans lequel l'élimination du H₂S du gaz est effectuée par lavage dans un processus multi-étapes par lavage à contre-courant.

14. Le procédé selon l'une quelconque des revendications précédentes, dans lequel le gaz purifié est utilisé pour produire de l'hydrogène, du GNS (gaz naturel synthétique), du méthanol, du diméthyléther, ou des aldéhydes éventuellement par hydroformulation, où le gaz purifié, éventuellement après d'autres étapes de traitement, est utilisée pour produire une composition d'hydrocarbures contenant des hydrocarbures en C4-C90, par exemple le gaz purifié, éventuellement après d'autres étapes de traitement, est utilisé pour produire une composition d'hydrocarbures par un procédé de Fischer-Tropsch.

15. Le procédé selon la revendication 14, comprenant les étapes de
- gazéifier de la matière première de biomasse pour produire un gaz contenant en tant que composants principaux du monoxyde de carbone, du dioxyde de carbone, de l'hydrogène et des hydrocarbures éventuellement conjointement avec des composants inertes et en tant qu'impuretés de composant mineurs choisis parmi le sulfure d'hydrogène, le chlorure d'hydrogène, l'ammoniac, le cyanure d'hydrogène et le sulfure de carbonyle et des mélanges de ceux-ci;
- introduire le gaz obtenu par gazéification de la matière première de biomasse dans un reformeur;
- reformer le gaz afin de diminuer la teneur en hydrocarbures dans un effluent gazeux du reformeur;
- retirer l'effluent gazeux d'une sortie du reformeur;
- éventuellement ajuster le rapport molaire hydrogène sur monoxyde de carbone du gaz purifié;
- éliminer une partie significative des impuretés du gaz par mise en contact du gaz avec une solution de lavage consistant en une solution pauvre en ions de métal de transition dans l'eau;
- retirer le gaz purifié;
- éventuellement ajuster le rapport molaire hydrogène sur monoxyde de carbone du gaz purifié, et
- alimenter le gaz ainsi obtenu dans une zone de réaction de Fischer-Tropsch,
dans lequel la concentration en sel de cuivre, tel que du sulfate de cuivre, dans la solution de lavage est de préférence 1500 ppm en poids ou moins, en particulier 100 à 1200 ppm en poids de cuivre.

16. Le procédé selon la revendication 15, comprenant la production d'une composition d'hydrocarbures qui est solide ou semi-solide à température ambiante et le traitement additionnel de la composition d'hydrocarbures par hydrotraitement, tel que l'hydroisomérisation, avec de l'hydrogène gazeux à une température accrue en présence d'un catalyseur afin de produire une composition d'hydrocarbures appropriée en tant qu'hydrocarbure de classe diesel ou en tant que composition à partir de laquelle un tel hydrocarbure peut être produit.
